# EUROPEAN PATENT APPLICATION

(11) **EP 2 945 076 A1**
(43) Date of publication of application: **18.11.2015**
(21) Application number: 15157467.0
(22) Date of filing: 03.03.2015
(51) Int. Cl.: G06F 17/30

(54) **Ranking system for search results on network**

(30) Priority: 12.05.2014 JP 2014098806
(71) Applicant: YYY Net Co., Ltd., Tokyo 160-0017 (JP)
(72) Inventor: Okamoto, Fumitaka, Tokyo, 160-0017 (JP)
(74) Representative: Makovski, Priscilla Mary

(57) **Abstract**

A system is provided, that receives, from user terminals 2, respective data about URL accessing histories and bookmarks on a network 4, and creates, based on the data, a table indicating, for each combination of a user and a URL, the number of accesses and whether already bookmarked to store in a database 18; receives, from a user terminal 2, a request for a search by a keyword, and acquires search results corresponding to the keyword from a search engine 3 on the network 4; and compares the search results with the table stored in the database, calculates, for each URL included in both the search results and the table, based on data of the number of accesses and whether already bookmarked in the table, a score, creates a view by arranging the URLs included in both the search results and the table in order of the scores, and transmits the view to the user terminal 2.

## Description

The present invention relates to a ranking system for search results on a network, or a computer network. In particular, the present invention relates to a ranking system for ranking results of a search by a user terminal, preferably, a mobile terminal such as a smartphone and a tablet terminal, and displaying the results on the user terminal.

When a search by a keyword is done using a search engine such as Google on a mobile terminal, search results are displayed on the mobile terminal in descending order of relevance to the search keyword. However, the display order is not necessarily optimized for a user doing the search. For example, URLs of, for example, web pages frequently viewed by the user of the mobile terminal, sites providing contents other than apps (applications), or bookmarked sites are not necessarily listed high in the search results.

When a search is done with a PC on an existing search engine, search results are displayed and a site of a URL selected by a user from the results can be satisfactorily displayed, on the PC. However, mobile terminals are characterized by having a small screen and not having a mouse (smartphones are further characterized by not having a keyboard), and sites listed high in the search results are likely to be unsuitable or unpopular to be displayed on such mobile terminals. Further, differences in the characteristics of PCs and mobile terminals may sometimes prevent the sites popular in the mobile terminals from being listed high in the search results of the existing search engines.

Further, there are various ranking sites on a computer network in some of which rankings are based on unknown or illegal reasons or are biased for advertising purposes. Some ranking sites collect user data and evaluations or sales summaries for ranking display, but data collection takes a lot of trouble, and takes time until data is accumulated. Other problems are that multiple voting may not be prevented, and factual answers may not be obtained. In light of these, it has been longed to be able to easily create various popularity rankings and reliability rankings based on user reviews, user votes, price investigations, and the like so far, without the need to collect such data.

In view of the problems of the background arts described above, the present invention has been made, and a first object of the present invention is to provide a ranking system for adapting rankings of search results on a computer network appropriately for searches done with a user terminal, preferably, a mobile terminal by automatically collecting URL accessing history (Web browsing history) data and bookmarking data in user terminals, preferably, mobile terminals.

A second object of the present invention is to provide a ranking system that automatically collects URL accessing history data and bookmarking data in user terminals, preferably, mobile terminals, and based on the data, easily creates popularity rankings for various genres, and provides users with the popularity rankings.

In order to achieve the above described first object, a first aspect of the present invention is a system comprising:
a database;
a first unit that receives, from user terminals, respective data about URL accessing histories and bookmarks on a network, and creates, based on the data, a first table indicating, for each combination of a user and a URL, the number of accesses and whether already bookmarked or not to store the table in the database;
a second unit that receives, from a user terminal, a request for a search by a keyword, and acquires search results corresponding to the keyword from a search engine on the network; and
a third unit that compares the search results acquired by the second unit with the first table stored in the database, calculates, for each URL included in both the search results and the first table, based on data of the number of accesses and whether already bookmarked or not in the first table, a first evaluation score, creates a first view by arranging the URLs included in both the search results and the first table in order of the first evaluation scores, and transmits the first view to the user terminal that requested the search by the keyword.

In order to achieve the above described second object, a second aspect of the present invention is a system comprising:
a database;
a first unit that receives, from user terminals, respective data about URL accessing histories and bookmarks on a network, and creates, based on the data, a first table indicating, for each combination of a user and a URL, the number of accesses and whether already bookmarked or not to store the table in the database;
a sixth unit that acquires URLs specifying resources on the network where respective predetermined keywords appear, creates, for each genre, a reference table between the keywords and their respective URLs to store the table in the database; and
a seventh unit that receives a request for popularity ranking acquisition of a genre from a user terminal, compares the reference table of the genre with the first table, calculates, for each keyword included in the genre, a second evaluation score based on data in the first table about the number of accesses and whether already bookmarked for each URL included in both the reference table of the genre and the first table, creates a second view by arranging the keywords included in the genre in order of the second evaluation scores, and transmits the second view to the user terminal that requested the popularity ranking acquisition.

In the system according to the above described first aspect of the present invention, each user terminal preferably comprises: a fourth unit that automatically collects the data about the URL accessing histories and the bookmarks in the user terminal to transmit the data to the first unit in the system; and a fifth unit that displays an input field for a search by a keyword, includes a keyword inputted to the input field into a request for a search by a keyword to transmit the request to the second unit in the system, and displays a first view transmitted from the third unit in the system.

In the system according to the above described second aspect of the present invention, each user terminal preferably comprises: a eighth unit that displays a selection field for selecting or an input field for inputting a genre for popularity ranking acquisition, includes the genre selected from the selection field or inputted to the input field into a request for the popularity ranking acquisition to transmit the request to the seventh unit in the system, and displays the second view transmitted from the seventh unit.

Further, the system according to the above described first aspect of the present invention may be combined with the system according to the above described second aspect of the present invention.

Furthermore, another aspect of the present invention is a computer program product comprising a program that causes a mobile terminal to operate as the user terminal described above.

The present invention to achieve the first object can acquire search results from a search engine (Google, etc.,) based on a keyword inputted by a user of a user terminal, preferably, a mobile terminal, and can correct and optimize the search results for the user terminal to display the results on the terminal. The correction and optimization of the search results include acquisition by an application installed in the user terminal and use of list data information on URL accessing histories and bookmarked sites by the user. As a result, even if a search by the same keyword as that for a search with, for example, a PC is done, sites which users of user terminals have frequently viewed or bookmarked actually are listed high in the search results. Thus, the present invention to achieve the first object can exhibit a technical effect of displaying the sites matching the preferences of all users of the user terminals where the application has been installed.

The present invention to achieve the second object can exhibit a technical effect of easily creating various rankings such as the popularity rankings.
Figure 1 is a block diagram illustrating an embodiment of a ranking system according to the present invention.
Figure 2 is an explanatory drawing illustrating data contents in tables 1, 2, and 3 created and stored by a server for the ranking system illustrated in Figure 1.
Figures 3A and 3B are explanatory drawings illustrating data contents respectively in views 1 and 2 created by the server for the ranking system illustrated in Figure 1 as well as views 1 and 2 corrected by weighting.

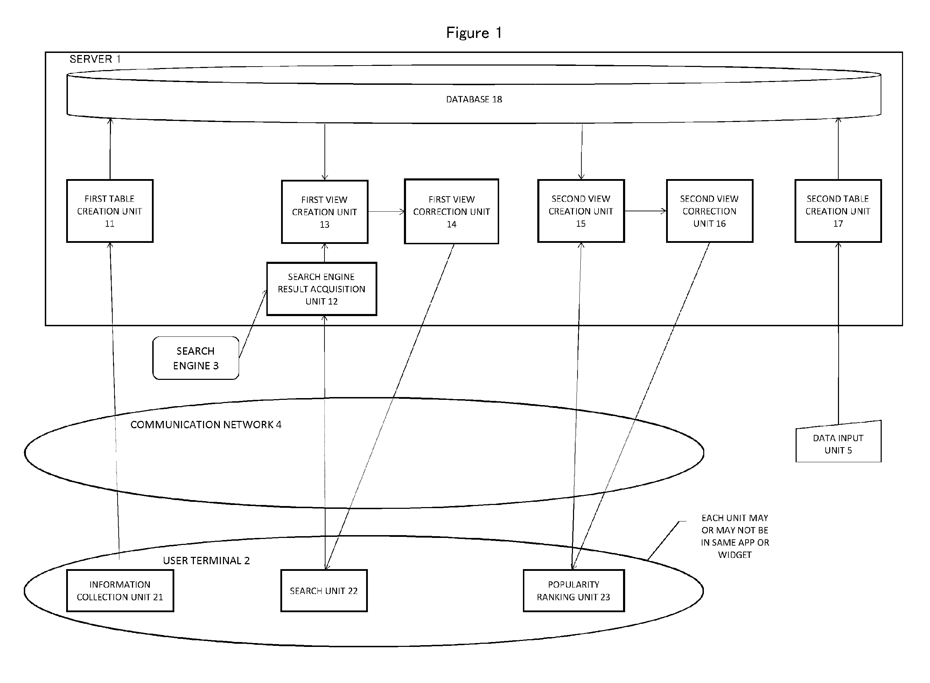

Figure 1 illustrates an embodiment of a ranking system according to the present invention. Figure 1 shows a server 1, a user terminal 2, an external search engine 3, a communication network 4, and a data input unit 5. Note that Figure 1 illustrates only one user terminal of a large number of user terminals.

The server 1 includes a first table creation unit 11, a search engine result acquisition unit 12, a first view creation unit 13, a first view correction unit 14, a second view creation unit 15, a second view correction unit 16, and a second table creation unit 17, each of which is a unit implemented by a computer program. The server 1 further includes a database 18.

In the following description, the terminal 2 is, as an example, a mobile terminal such as a smartphone, a tablet terminal, or the like. An application (hereinafter referred also to as "app") to be described later is installed in each terminal 2 registered in the ranking system. As the terminal 2, a terminal using an OS such as Android may be currently used. Although the terminal is required for acquiring web browsing histories and a bookmark list, as described later, any user terminal including a non-mobile terminal may be used as long as the terminal satisfies the above requirement.

The search engine 3 is a general-purpose search engine such as Google, Bing, or the like. The search engine 3 can do a search by a keyword inputted from the terminal 2 to rank search results, and can return the ranked results to the terminal that requested the search. According to the present invention, the search engine 3 communicates with the search engine result acquisition unit 12 in the server 1. An originally developed search engine may be used as the search engine 3.

It should be noted that the present invention has been made based on the following findings by the present inventor.
(1) A Site a URL of which is bookmarked by a user in her or his smartphone is trusted by the user, liked by the user, or often accessed by the user with a higher probability than other sites URLs of which are not bookmarked.
(2) A site that has been viewed a plurality of times in a predetermined period by the user with the smartphone is that in which the user is interested, or is liked by the user with a higher probability than other sites that have not been viewed a plurality of times in a predetermined period by the user with the smartphone.
(3) The above findings (1) and (2) lead to considering that search results or ranking results closer to user's desire are displayed by feeding back information of user's URL accessing histories, a list of sites that are bookmarked (or that were bookmarked), and the like to the search results or the rankings.

Based on the above findings, the ranking system of the present invention is configured such that display order data obtained by the search engine 3 is corrected based on data of the URL accessing histories (time during which a user stays at a page may be added) and bookmarks of all users of the terminals 2 with the app installed therein, and thereby optimized results and positions are displayed on the terminal 2.

The app installed in each terminal 2 includes an information collection unit 21, a search unit 22, and a popularity ranking unit 23, each of which is a unit implemented by a program. When the app is installed in the terminal 2, individual identification information (that is, user ID) about the terminal 2 is acquired. Note that in order to acquire more detailed ranking information, a user may be prompted to input user information such as gender, age, and residential areas.

The information collection unit 21 acquires URL accessing history information and bookmark information in the terminal 2 to transmit the information to the first table creation unit 11 in the server 1. The URL accessing history information includes an accessed URL, the number of accesses to the URL, and times and dates of accessing to the URL. Note that a time during which a user stays at a site of the URL, if possible, may be acquired and may be included into the URL accessing history information.

The search unit 22 displays an input field so that the user may input a keyword on the terminal 2, transmits the inputted keyword to the search engine result acquisition unit 12 on the server 1, receives a view 1 that was corrected by weighting by the first view correction unit 14 in the server 1, and displays the corrected view 1 as search results on the terminal 2.

The popularity ranking unit 23 provides the terminal 2 with an input field for inputting the type of rankings, that is, a genre, or a selection field for selecting the genre, transmits the inputted or selected genre to the second view creation unit 15 in the server 1, and displays on the terminal 2 a view 2 received from the second view unit 16 in the server 1.

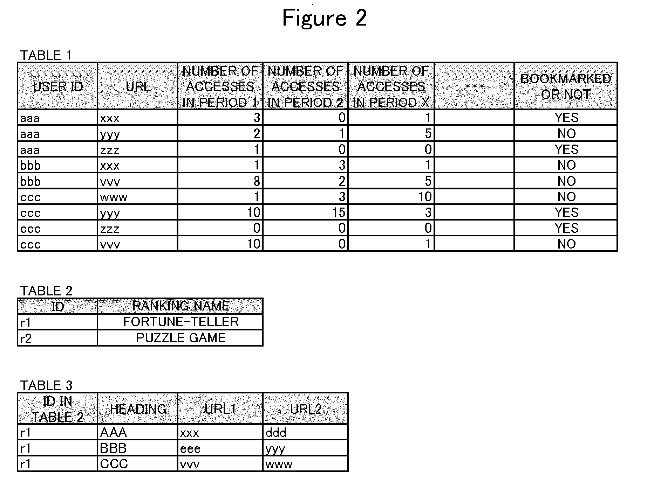

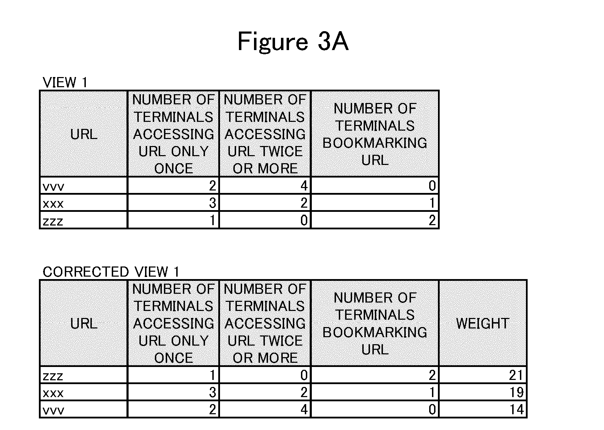

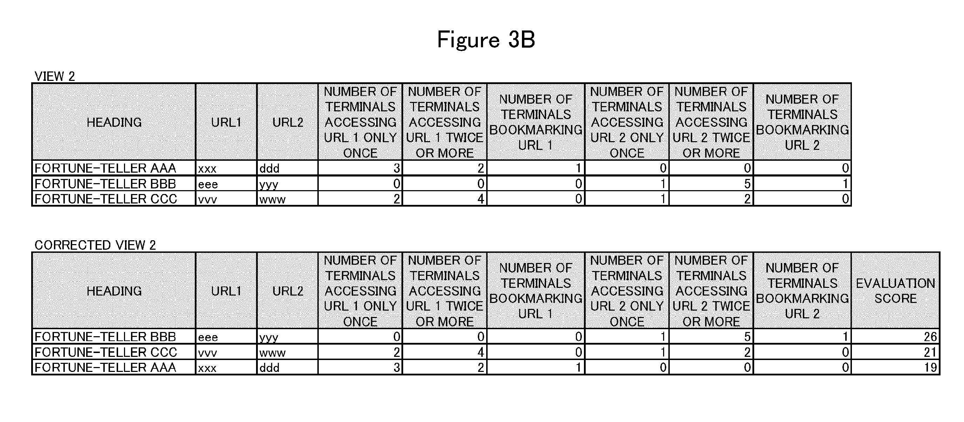

The database 18 in the server 1 stores tables 1, 2, and 3 briefly illustrated in Figure 2, as well as the views 1 and 2 briefly illustrated in Figures 3A and 3B.

The table 1 is created and, preferably, updated by the first table creation unit 11 in the server 1 and shows URL accessing histories and lists of bookmarked URLs on the Web of all the terminals 2 registered in the ranking system. In order to create or update the table 1, the first table creation unit 11 acquires, by the above described apps (widget) installed in the respective terminals 2, the URL accessing history data and bookmarked URL list data of the terminals 2. The URL accessing history data may include Internet histories and web browsing histories in a predetermined period. An example of the predetermined period may include one week, one month, or any other period. Note that the bookmarked URL list is a list of bookmarked URLs currently set in the terminal 2. Based on the acquired data, the table 1 illustrated in Figure 2 is created and stored in the database 18, and, preferably, further the table 1 is updated each time data is acquired from the terminal 2.

Note that although it is not essential, the following data may be acquired from the terminal 2 and may be included in the table 1.
- A list of URLs that were bookmarked in past times
- Terminal location information (when location information is important for search results)
- A list of currently installed apps, app use histories, access histories, uninstalled app histories (when apps are displayed in search results)
- Information on whether the smartphone is in phone number contract or not (to prevent multiple registration fraud)
- Other information about the terminal (to prevent multiple registration fraud)
- Recently used app list and frequently used apps

The table 2 illustrates correspondences between ranking names representing genres and their ranking IDs. The table 3 is created for each ranking ID of the table 2, that is, for each genre. In a case where the genre is, for example, a fortune-teller as illustrated in the table 3, regarding a fortune-teller name as a keyword, URLs specifying resources (or pages) where the name appears and the user evaluation scores are arranged in descending order of the user evaluation scores. The tables 2 and 3 are created and, preferably, updated by the second table creation unit 17 based on data acquired by appropriately searching in advance for URLs or the like on the Internet. The detail will be described later.

The view 1 is created to provide a user with results from a keyword search. More specifically, the first view creation unit 13 creates the view 1 by specifying search results acquired by the search engine result acquisition unit 12 and a period in the table 1 stored in the database 18. Then, the view 1 is provided to the first view correction unit 14. Note that the search engine result acquisition unit 12 receives from the search engine 3 search results based on a search keyword received from the terminal 2, and transmits all or some tops of the search results received from the search engine 3 to the first view creation unit 13. For example, if there are a large number of search results, it is assumed that it takes time to acquire all the search results and sites that are low in display order have a low relevance to the keyword, and thus only the top, for example, 400 sites are transmitted to the first view creation unit 13. On the contrary, if the number of search results is small, for example, less than 400, all the search results are transmitted to the first view creation unit 13.

Each time a user requests a search, the view 1 corresponding to her or his user ID is created. As illustrated in Figure 3A, the view 1 shows URLs that are included in the search results from the search engine 3 and appear in the table 1. Each URL is shown together with the number of terminals accessing the URL only once, the number of terminals accessing the URL twice or more times, and the number of terminals bookmarking the URL.

The created view 1 is corrected by weighting in the first view correction unit 14, and transmitted to the terminal 2 of the user who inputted the search keyword. Then, the corrected view 1 is displayed, by a function of the search unit 22 of the app installed in the terminal 2, on the terminal as the search results.

Here, the description will focus on correction by weighting of the view 1 by the first view correction unit 14.

The first view correction unit 14 compares URLs acquired from the search engine 3 as search results for the inputted keyword with the URL accessing histories and the bookmarked URLs in the table 1, that is, acquired from all the terminals 2 where the app is installed. It is configured that the URL accessing histories and the bookmarked URLs in the table 1 to be compared are in a period from one week to one month, from one week to one year, or the like. The period may be changed according to the keyword or the like. Then, as a result of the comparison, the matched URLs are quantified and ranked, for example, by the following rules. Note that unmatched URLs (acquired from the search engine 3) are displayed below the matched URLs in accordance with the order in the unmatched URLs.
a. One point for a URL accessed only once
b. Three points for a URL accessed twice or more
c. Ten points for a URL bookmarked.

For example, assuming that, among the terminals 2 where the app is installed, a URL was accessed only once by 100 terminals, the URL was accessed twice or more by 20 terminals, and the URL was bookmarked by the 8 terminals, points are calculated as follows:
a = 100 points
b = 60 points
c = 80 points

Thus, a score of the URL is a + b + C = 240 points.

Note that a user accessing a URL twice or more indicates a high probability that the user has an interest in the URL, and thus points for such a URL are higher than those for a URL accessed only once. The points for the URL accessed only once may be set to 0. Further, the newer an access history for an URL is, the higher points for the URL may be set to be. Furthermore, the number of users who installed the app, and the frequency of use may be quantified.

The first view correction unit 14 rearranges URLs having the evaluation scores calculated in this manner (matched URLs) by rearranging the URLs in descending order of the evaluation scores to create a corrected view 1, and transmits the corrected view 1 as search results to the terminal 2. Note that it may be configured such that, as search results on the terminal 2, it can be selected using a button or the like whether the corrected view 1 is displayed or, without any change, the search results from the search engine 3 (search engine search results) are displayed. The corrected view 1 may include positions in the search engine search results. Further, a score of a URL may be calculated from a position in the search engine search results (for example, 1st: 1.000 points, 2nd: 0.999 points, 3rd: 0.998 points, ..., 500th: 0.050 points), and URLs may be displayed in descending order of sums of the scores of the search engine search results and the scores of the search results in the view 1.

By the way, a URL that has a quite low position in the search engine search results but is bookmarked or has many accessing histories in the table 1 may score high. It may not be suitable to display such a URL with the high score at a high position in search results for a keyword inputted by a user. Thus, it may not be appropriate to make a URL having a position equal to or less than a certain position in the search engine search results be at a high position in the search results for a keyword inputted by a user, even if its score is high based on whether bookmarked and the accessing histories. In order to reduce such problems, it is useful to acquire no URLs having positions equal to or less than a certain position in the search engine search results, or to use a calculation scheme in which more positions for a URL are lost, lighter the URL is weighted.

Further, it may be configured such that user information is acquired from a user; based on the user information, users are narrowed down by gender, age, or the like; URL accessing information and bookmark information only about the narrowed down users are extracted from the table 1; and the information are compared with the data from the search engine 3.

The second view creation unit 15 and the second view correction unit 16 in the server 1 are intended to allow popularity rankings of various genres specified by a user to be displayed on the terminal 2. When a name of a genre for rankings is inputted to an input field or is selected from a selection field provided by the popularity ranking unit 23 of the app installed in the terminal 2, the second view creation unit 15 creates a view 2 based on the tables 1 to 3 by specifying a period, and the second view correction unit 16 corrects by weighting the created view 2. For example, assuming that r1 representing a fortune-teller is specified as a ranking ID and a period is specified, as illustrated in Figure 3B, the view 2 shows, for each fortune-teller, URLs (e.g., URL 1 and URL 2) specifying resources where the fortune-teller appears, a user evaluation, the number of terminals accessing each of the URLs only once, the number of terminals accessing each of the URLs twice or more, and the number of terminals bookmarking each of the URLs. The view 2 corrected by weighting by the second view correction unit 16 is transmitted to the terminal 2. Then, the corrected view 2 is displayed on the terminal 2 by a function of the popularity ranking unit 23 of the app installed in the terminal 2.

As described above, the table 2 illustrates correspondences between genres for rankings such as "fortune-teller" and "puzzle game", and their IDs (ranking IDs). The table 3 is created in advance for each genre, namely, for each ranking ID based on data acquired using an appropriate search engine on the Internet by the second table creation unit 17.

For example, when popularity rankings for the "fortune-teller" as the genre is created, a list of entries of fortune-tellers is created, for example, using data acquired by doing a search by "fortune-teller list" and lists appearing in fortune-telling portal sites. Note that the list excludes URLs specifying portal sites, blogs, or the like where an individual fortune-teller cannot be identified. When there are URLs of an individual page introducing a fortune-teller in a fortune-telling portal site and a blog personally managed by the fortune-teller, such URLs are counted as those for the fortune-teller. For example, assuming that a name of a fortune-teller is "AAA", a URL specifying a page where only the fortune-teller is introduced is counted as that of "AAA", but a URL specifying a page where a plurality of fortune-tellers are introduced is not counted because an individual fortune-teller cannot be identified.

Thus, the second table creation unit 17 creates and stores in advance tables 3 each of which is associated with a predetermined genre such as a "fortune-teller" in the database 18, and, preferably, appropriately updates the tables 3. As illustrated in Figure 2, the table 3 includes names of fortune-tellers, and URL 1, URL 2, ... specifying resources where respective names appear, as attributes. Then, when "fortune-teller" is inputted as a genre to an input field provided by the popularity ranking unit 23, the second view creation unit 15 refers to the table 2 to read the table 3 corresponding to the genre "fortune-teller" from the database 18, and specifies a period to read from the database 18 the table 1, which has been created and, preferably, updated by the first table creation unit 11. Then, based on the tables, the second view creation unit 15 creates a view 2 and stores the created view 2 in the database 18. URLs included in the table 1 are compared with those included in the table 3, URLs matched as a result of the comparison are associated with fortune-tellers appearing in resources specified by the matched URLs, and, in the view 2, the matched URLs are displayed in descending order of user evaluation of the fortune-tellers.

Then, the view 2 is corrected by the second view correction unit 16. The correction of the view 2 will be described in more detail. The second view correction unit 16 counts, for each URL included in the view 2 (specifying a resource where a fortune-teller appears), the total number of accesses by users and the number of users bookmarking the URL, based on data in the table 1. Then, the second view correction unit 16 calculates an evaluation score for each fortune-teller, in the same manner as for the correction by weighting of the view 1, for example, by counting accessing the URL once as one point, accessing the URL twice or more as three points, and bookmarking the URL as ten points.

For example, as illustrated in Figure 3B, regarding the fortune-teller AAA, three users accessed URL 1 or URL 2 once, two users accessed URL 1 or URL 2 twice or more, and one user bookmarked URL 1 or URL 2.

Thus, the evaluation score = 1 x 3 + 3 x 2 + 10 x 1 = 19

Regarding the fortune-teller BBB, one user accessed URL 1 or URL 2 once, five users accessed URL 1 or URL 2 twice or more, and one user bookmarked URL 1 or URL 2.

Thus, the evaluation score =1x1+3x5+ 10 x 1 = 26

Regarding the fortune-teller CCC, three users accessed URL 1 or URL 2 once, six users accessed URL 1 or URL 2 twice or more, and no user bookmarked URL 1 or URL 2.

Thus, the evaluation score =1x3+3x6+ 10 x 0 = 21

Thus, the second view correction unit 16 calculates weights, namely, the evaluation score for each fortune-teller and rearranges fortune-tellers in order of the evaluation points, as follows.
1st: fortune-teller BBB for evaluation score 26
2nd: fortune-teller CCC for evaluation score 21
3rd: fortune-teller AAA for evaluation score 19

Then, the corrected view 2 is transmitted to and displayed on the terminal 2 that transmitted the ranking request. Note that the corrected view 2 may display only appropriate items including total evaluation scores on the terminal 2 without displaying all the items shown in Figure 3B.

If there are user evaluation scores on a network such as the Internet, such user evaluation scores may be added to the calculation of the evaluation scores according to the present invention. Further, users may write reviews and may input an evaluation by the users, points scored by the users, or the like to an individual resulted list as the rankings displayed. Furthermore, it may be configured such that rankings reflect the evaluation and the scored points. In this case, using the points scored by the users, the rankings may be created based on all or some parameters of the Web browsing histories, the number of bookmarks, and the points scored by the users. Further, it may be configured such that users are narrowed down by gender, age, or the like; data of URL accessing and bookmarking about the narrowed down users are extracted from the table 1; and the extracted data is compared with the data in the table 3.

Still further, "display" or "non-display" of the rankings may be selected by a button. Further, it may be configured such that, below a genre selection or input field on a smartphone screen, candidates for the field are displayed with a horizontal swipe.

As described above, according to the ranking system of the present invention, the app including the information collection unit 21, the search unit 22, and the popularity ranking unit 23 is installed in the mobile terminals 2; the URL accessing histories and the bookmarking histories of the mobile terminals 2 are automatically collected by a function of the information collection unit 21 to create a table 1; and based on contents of the table 1, search results by any search engine 3 are corrected and returned to the mobile terminals 2. Thus, according to the ranking system of the present invention, search results of URLs adapted to activities of users of the mobile terminals and more suitable for displaying on the mobile terminals. Further, various popularity rankings are corrected based on contents of the table 1 automatically collected and returned to users of the mobile terminals, and thus the popularity rankings suitable for the users can be provided to the users without having questionnaires for the users.

## Claims

1. A system comprising:
a database (18);
a first unit (11) that receives, from user terminals (2), respective data about URL accessing histories and bookmarks on a network (4), and creates, based on the data, a first table indicating, for each combination of a user and a URL, the number of accesses and whether already bookmarked or not to store the table in the database (18);
a second unit (12) that receives, from a user terminal (2), a request for a search by a keyword, and acquires search results corresponding to the keyword from a search engine (3) on the network (4); and
a third unit (13, 14) that compares the search results acquired by the second unit (12) with the first table stored in the database (18), calculates, for each URL included in both the search results and the first table, based on data of the number of accesses and whether already bookmarked or not in the first table, a first evaluation score, creates a first view by arranging the URLs included in both the search results and the first table in order of the first evaluation scores, and transmits the first view to the user terminal (2) that requested the search by the keyword.

2. The system according to claim 1, wherein
each user terminal(2) comprises:
a fourth unit (21) that automatically collects the data about the URL accessing histories and the bookmarks in the user terminal (2) to transmit the data to the first unit (11) in the system; and
a fifth unit (22) that displays an input field for a search by a keyword, includes a keyword inputted to the input field into a request for a search by a keyword to transmit the request to the second unit (12) in the system, and displays a first view transmitted from the third unit (13, 14) in the system.

3. The system according to claim 1, further comprising:
a sixth unit (17) that acquires URLs specifying resources on the network (4) where respective predetermined keywords appear, creates, for each genre, a reference table between the keywords and their respective URLs to store the table in the database (18); and
a seventh unit (15, 16) that receives a request for popularity ranking acquisition of a genre from a user terminal (2), compares the reference table of the genre with the first table, calculates, for each keyword included in the genre, a second evaluation score based on information in the first table about the number of accesses and whether already bookmarked for each URL included in both the reference table of the genre and the first table, creates a second view by arranging the keywords included in the genre in order of the second evaluation scores, and transmits the second view to the user terminal (2) that requested the popularity ranking acquisition.

4. The system according to claim 2, further comprising:
a sixth unit (17) that acquires URLs specifying resources on the network (4) where respective predetermined keywords appear, creates, for each genre, a reference table between the keywords and their respective URLs to store the table in the database (18); and
a seventh unit (15, 16) that receives a request for popularity ranking acquisition of a genre from a user terminal (2), compares the reference table of the genre with the first table, calculates, for each keyword included in the genre, a second evaluation score based on information in the first table about the number of accesses and whether already bookmarked for each URL included in both the reference table of the genre and the first table, creates a second view by arranging the keywords included in the genre in order of the second evaluation scores, and transmits the second view to the user terminal (2) that requested the popularity ranking acquisition.

5. The system according to claim 4, wherein each user terminal (2) further comprises:
a eighth unit (23) that displays a selection field for selecting or an input field for inputting a genre for popularity ranking acquisition, includes the genre selected from the selection field or inputted to the input field into a request for the popularity ranking acquisition to transmit the request to the seventh unit (15, 16) in the system, and displays the second view transmitted from the seventh unit (15, 16).

6. A system comprising:
a database (18);
a first unit (11) that receives, from user terminals (2), respective data about URL accessing histories and bookmarks on a network (4), and creates, based on the data, a first table indicating, for each combination of a user and a URL, the number of accesses and whether already bookmarked or not to store the table in the database (18);
a sixth unit (17) that acquires URLs specifying resources on the network (4) where respective predetermined keywords appear, creates, for each genre, a reference table between the keywords and their respective URLs to store the table in the database (18); and
a seventh unit (15, 16) that receives a request for popularity ranking acquisition of a genre from a user terminal (2), compares the reference table of the genre with the first table, calculates, for each keyword included in the genre, a second evaluation score based on data in the first table about the number of accesses and whether already bookmarked for each URL included in both the reference table of the genre and the first table, creates a second view by arranging the keywords included in the genre in order of the second evaluation scores, and transmits the second view to the user terminal (2) that requested the popularity ranking acquisition.

7. The system according to claim 6, wherein the user terminal (2) further comprises:
a eighth unit (23) that displays a selection field for selecting or an input field for inputting a genre for popularity ranking acquisition, includes the genre selected from the selection field or inputted to the input field into a request for the popularity ranking acquisition to transmit the request to the seventh unit (15, 16) in the system, and displays the second view transmitted from the seventh unit (15, 16).

8. A computer program product comprising a program that causes a mobile terminal to operate as the user terminal (2) according to claim 2.

9. A computer program product comprising a program that causes a mobile terminal to operate as the user terminal (2) according to claim 5.
